Europäisches Patentamt

European Patent Office

Office européen des brevets

(19)

(11) Publication number: **0 095 376**
**A1**

(12) **EUROPEAN PATENT APPLICATION**

(21) Application number: **83302961.4**

(22) Date of filing: **23.05.83**

(51) Int. Cl.³: **G 01 N 27/30**
**G 01 N 27/00**

(30) Priority: **24.05.82 JP 88319/82**

(43) Date of publication of application:
**30.11.83 Bulletin 83/48**

(84) Designated Contracting States:
**DE FR GB IT**

(71) Applicant: **KURARAY CO., LTD.**
**1621 Sakazu**
**Kurashiki-City Okayama Prefecture(JP)**

(72) Inventor: **Yano, Makoto**
**1-2-40 Hamanochaya**
**Kurashiki-City(JP)**

(72) Inventor: **Nakamura, Michihiro**
**376-5 Makabe**
**Soja-City(JP)**

(72) Inventor: **Maruyama, Hitoshi**
**1660 Sakazu**
**Kurashiki-City(JP)**

(72) Inventor: **Kajitani, Koichi**
**1652 Sakazu**
**Kurashiki-City(JP)**

(74) Representative: **Crampton, Keith John Allen et al,**
**D YOUNG & CO 10 Staple Inn**
**London WC1V 7RD(GB)**

(54) **Steam autoclavable reference electrode.**

(57) A steam autoclave liquid junction reference electrode comprises one piece of tube (10), an internal solution (11) housed in the tube (10), gelled by 2 to 10% by weight of polyvinyl alcohol and, as cross-linking agent, 0.1 to 2% by weight of one or more titanium, zirconium and vanadium compounds, an internal electrode (12) immersed in the internal solution (11), and a liquid junction (13), mounted on the uncurved end of tube (10) for connecting the inside of the tube (10) with the outside. This reference electrode is advantageously used as an ulta-small-sized thermally sterilizable reference electrode together with an ion sensor for monitoring the living body.

Fig-2

1

# STEAM AUTOCLAVABLE REFERENCE ELECTRODE

The present invention relates to steam autoclavable reference electrodes, in particular those suitable for use in an ion sensor using a field effect transistor having a selectively sensitive membrane on its gate portion.

In the physiological and medical fields, it has recently been the practice to measure the concentration of substances contained in body fluids, e.g. blood. Examples of such substances are ions such as those of hydronium, sodium, potassium, calcium and chloride; gases such as oxygen and carbon dioxide; sugars such as glucose and lactose; and other chemical substances such as hormones, enzymes, and antibodies. The concentration of such chemical substances has hitherto been measured by using a glass electrode, which is useful since the concentration of the specific chemical substances contained in the solutions to be tested can be easily determined by measuring only the electric potential of the glass electrode when directly immersed in the solutions to be tested. However, the miniaturization of a glass electrode with the aim of the determination of the local amounts of chemical substances in tissue of living bodies led to the problem that the mechanical strength of the glass membrane was reduced and simultaneously the electric resistance of the glass membrane was increased, thereby reducing the response speed.

An ion sensor using the field effect of semi-conductors was proposed in U.S. Patents Nos. US-A-4,020,830 and US-A-4,218,298 in order to solve the above described problems of such glass electrodes. This ion sensor is called ISFET (Ion-Sensitive Field Effect Transistor). The boundary electric potential on the surface of the ion-sensitive membrane of an ISFET is dependent upon the activity of the specific ions contained in the solution to be tested. If the electric potential of the solution to be tested is fixed by means of a reference electrode, the change in this boundary electric potential leads to a change in conductivity of the channel under the ion-sensitive membrane. In the case when the boundary electric potential is detected using this principle, an amplifier of high input electric impedance is not required for an outside circuit since the electric resistance of an ISFET is very small. This ion sensor has the following characteristics:

(1) The miniaturization of the ion sensor is possible since the electric resistance of an ISFET is very small and the response speed is large.

(2) Various kinds of ion sensor can be integrated (multiplied) on one silicon chip since the IC technique is used.

(3) It is suitable for mass production.

On account of these characteristics, the ISFET is attracting interest as a sensor for monitoring the amount of chemical substances contained in the living body by inserting it in the tissue of the living body. Further, it is known that a sensor that responds to various kinds of substances can be obtained by changing the ion-sensitive membrane of ISFET. Examples of sensors that have been used are (i) a pH sensor using silicon nitride, alumina, or tantalum pentoxide as the sensitive membrane; (ii) a cation (e.g. $Na^+$ or $K^+$) sensor using an inorganic glass membrane as the sensitive membrane; (iii) a chloride ion-sensor using inorganic compounds such as $AgCl$ as the sensitive membrane; (iv) an ion (e.g. $Na^+$, $K^+$ or $Ca^{++}$) sensor using a polymer matrix such as polyvinyl chloride and silicone resin, to which such materials as crown ether and/or phosphate are added or fixed; (v) an enzyme sensor using a polymer matrix to which an enzyme is fixed as the sensitive membrane; and (vi) an immuno-sensor using a polymer matrix to which antibody or antigen is fixed as the sensitive membrane.

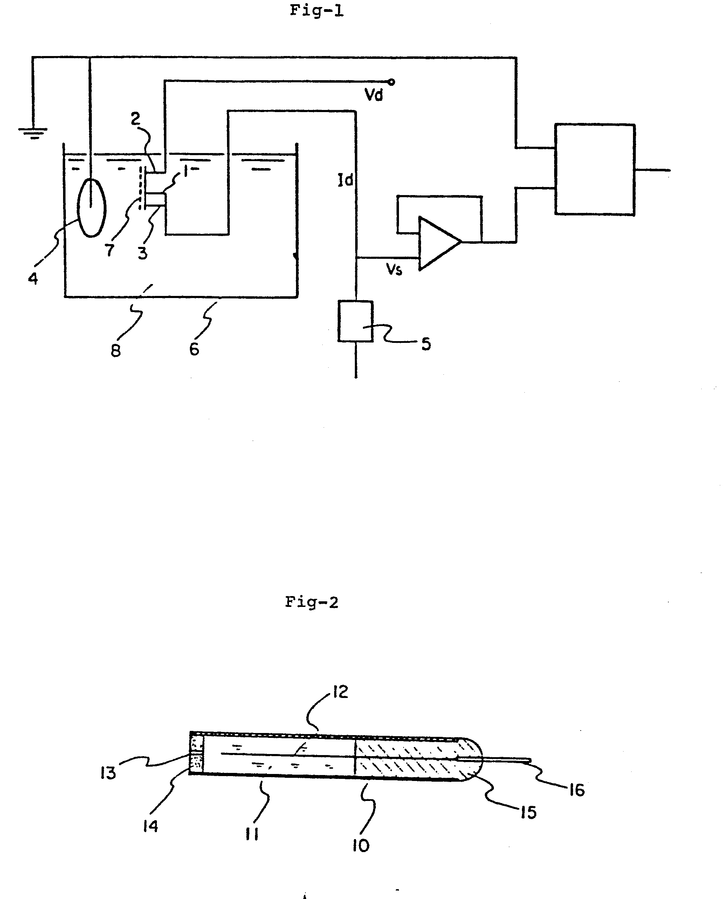

Usually an electric circuit shown in Fig. 1 of the accompanying drawings is used for measuring the concentration of ions contained in the solution to be tested by means of the ion sensors. That is to say, an ISFET 1 is immersed in the solution 8 to be tested, which is housed in a receptable 6 together with a liquid-junction reference electrode 4, and is operated by a source follower circuit by connecting the positive electric potential of a voltage source Vd to a drain terminal 2 of the ISFET and connecting a constant-current circuit 5 to a source terminal 3 of the ISFET. The change of the conductivity of the channel under the ion-sensitive membrane 7 owing to the change of boundary electric potential between the membrane 7 and the solution 8 is taken out as a source potential Vs. It is possible to measure the concentration of ions contained in the solution to be tested by measuring the source potential Vs, since Vs is proportional to the logarithm of the concentration of ions.

The reference electrode 4, which keeps the electric potential of the solution 8 constant regardless of the composition of the solution 8, is indispensable for measuring the amount of chemical substances contained in the solution to be tested either by the ion sensors or by the conventional glass electrode. To this end, the reference electrode is constructed so that the solution to be tested may be brought into contact with an internal solution. This is housed in a closed tube and has a constant composition through a small space. It is called a liquid junction and is provided at the pointed end of the closed tube. The internal electrode such as Ag-AgCl electrode is immersed in the internal solution housed in the closed tube.

In particular, a reference electrode used for monitoring the living body together with ion sensors such as ISFET, must be steam-autoclavable and must be miniaturized so that it may be inserted into a living body. It is required to further miniaturize a reference electrode for a combined type sensor which houses an ISFET and a reference electrode in a piece of tube. It is extremely important to prevent the internal solution from flowing out, since it causes the change of the electric potential of the reference electrode. In order to reduce the flowing out of the internal solution, a reference electrode using an acetyl cellulose membrane or ceramics, which is permeable to water and ions, has been proposed as a liquid junction. Such a reference electrode solution that flows out during the measurement can be reduced, but it has the following disadvantages in steam autoclaving, which is ususally carried out in an atmosphere of steam at a high temperature of about 120 ° C and a high pressure for about 20 minutes:

(1)     The internal solution flows out in the steam autoclaving,

(2)     air dissolved in the internal solution adheres to the surface of the internal electrode in the form of bubbles or closes a liquid junction.

With the intention of overcoming the above-described disadvantages, the steam-autoclaved internal solution is put in a tube in which the internal electrode is housed just before use of the reference electrode. However, the above described method is not preferable because there is the possibility that the sterilization may be spoiled and air mixed in the internal solution when the steam-autoclaved internal solution is put in a tube. On the other hand, in order to prevent the internal solution from flowing out during the measurement, the use as the internal solution of a gel such as agar-agar or gelatine;     a sol such as polyvinyl alcohol or polyhydroxymethyl methacrylate; or a hydrogel such as hyperfine silica is known. None of these is crosslinked with crosslinking agent. Although such a reference electrode has the excellent advantage that the internal solution can be prevented from flowing out during the measurement around room temperature and generation of bubbles can be prevented during the storage, a reference electrode using the above described gel, sol, and hydrogel as the internal solution still has the disadvantages mentioned below. For example, agar-agar gel and polyvinyl alcohol sol impart increased fluidity to the solutions, which easily flow out, during steam autoclaving. Polyhydroxymethyl methacrylate sol can not be used as the internal solution because of phase separation on heating. Further, it is difficult to put hyperfine silica hydrogel in a tube owing to its high viscosity. As a result, a reference electrode using the above described gel, sol, and hydrogel as the internal solution cannot be used in practice.

A steam-autoclavable reference electrode according to the present invention comprises one piece of tube, an internal solution housed in the tube and gelled by 2 to 10% by weight of polyvinyl alcohol, and, as cross-linking agent, 0.1 to 2% by weight of one or more compounds of titanium, zirconium, and/or vanadium; an internal electrode immersed in the internal solution; and a liquid junction, mounted at one end of the tube, for connecting the inside of the tube with the outside.

The electrode of the invention must not generate molten substances harmful to the living body such as acute toxic substances, pyrogens and potassium-permanganate-reductive substances.

In the accompanying illustrative drawings:

Fig. 1, as already mentioned, is a diagram showing an electric circuit for measuring the concentration of ions contained in a solution to be tested using an ISFET and a reference electrode,

Fig. 2 is a section showing an example of a reference electrode according to the present invention,

Fig. 3 is a section showing a combined sensor in which an ISFET and a reference electrode are housed in a piece of catheter, and

Fig. 4 is a section showing a combined sensor in which an ISFET and a reference electrode are housed in a double-lumen catheter.

Fig. 2 is a section showing an example of a steam-autoclavable reference electrode according to the present invention. The electrode is composed of a tube 10, a gelled internal solution 11 housed in tube 10, an internal electrode 12 immersed in internal solution 11, and a liquid junction 13 mounted at the uncurved end of tube 10.

It is desirable that said tube 10 be made of waterproof materials, e.g., a resin such as polyamide (e.g. nylon 6, nylon 11 or nylon 12), polyester resin, polypropylene resin, or polyvinyl chloride resin; a rubber-like resin such as silicone rubber, urethane rubber or polyisoprene rubber.

The electrodes whose electric potential is determined only by the concentration of $Cl^-$ contained in the internal solution, are required for the internal electrode 13. A saturated calomel electrode (SCE) or an Ag-AgCl electrode may be used. An Ag-AgCl electrode, which can be produced by electrolysing a silver wire, is suitable in view of the ultra-miniaturization among them. In addition to the above described electrodes, ISFETs that are selectively sensitive to the specified ions contained in the internal solution can also be used. This method has the advantage that the temperature compensation can be easily carried out if an ISFET having the same temperature characteristics as an ISFET of the ion-detecting side is used. In this case also, the reference electrode is a gate-insulated electrode. Accordingly, it is required that the electric potential of the solution to be tested is fixed by means of a conductive pseudo reference electrode and that the difference between the output voltage of an ISFET and a reference ISFET is read.

It is required that the liquid junction 13, which is housed in one end of tube 10 and connects the internal solution with the outside, be such that the amount of internal solution that flows out is reduced and that there be no possibility that the liquid boundary electric potential should become unstable. As a rule, the liquid junction can be fabricated by mixing cotton yarn, hollow fibres made of hydrophilic polymers, porous ceramics, and asbestos fibres. Although the hollow fibres are particularly preferable in view of the miniaturization of the liquid junction and the improvement in the reproducibility, those of cellulose, cellulose acetate, copolymers of ethylene with vinyl alcohol, and polyvinyl alcohol are especially suitable. Further, tube 10 may be provided with small holes in its side wall or used as the liquid junction.

Epoxy resin or silicone resin alone or epoxy resin together with silicone resin may be used as the resin 14 for closing the uncurved end of the tube. The other end of the tube may be closed with the same type of resin at 15. A connecting pin 16 is embedded in resin 15. Another end of this connecting pin is connected with an Ag-AgCl electrode.

The internal space of tube 10 made of the same resin as resin 14, 15 is filled with the internal solution 11. Although a saturated aqueous solution of KCl is frequently used for the usual pH-measurement, the composition of the internal solution must be selected for medical use, in particular in the measurement of body fluid such as the blood. The following conditions are given for the internal solution:

(1) No liquid junction potential is produced at the liquid junction. The liquid junction potential is reduced with the decrease of the difference between the mobility of positive ions and that of negative ions in the liquid junction. In order to realize this condition, positive ions should have the same mobility as negative ions, and their concentrations should be larger than those in the solution to be tested. Electrolytic substances in which the mobility of the positive ions is equal to that of the negative ions include $KCl$, $KNO_3$, $NH_4Cl$ and $NH_4NO_3$.

(2) Ions to which an ion sensor responds are absent. If the internal solution contains an ion to which an ion sensor responds, outflow of the internal solution from the liquid junction leads to a change of the activity of the ions in the solution to be tested, thereby causing an error.

(3) Substances that react with the solution to be tested or are harmful to the living body are absent. For example, it is necessary to use e.g. $KNO_3$ as electrolytic substance contained in the internal solution when for example $Ag^+$, which reacts with $Cl^-$, is contained in the solution to be tested.

The internal solution is gelled by a cross-linking agent. The gel must satisfy the following conditions so that it may be safely steam-autoclaved;

(1) It is in the form of sol, which has a sufficient fluidity so that it may be easily put in the tube and subsequently may be gelled with ease to lose it fluidity.

(2) It has sufficient gel strength after fabrication of the reference electrode that outflow from the liquid junction, the generation of bubbles, and deterioration in quality are not found even in an atmosphere of steam having a high temperature of about 120 ° C and high pressure.

(3) In the measurement, no ingredients harmful to the living body flow out of the gelled internal solution.

The above described conditions can be attained by gelling the internal solution with polyvinyl alcohol and the specified cross-linking agent.

Polyvinyl alcohol (PVA) used for gelling the internal solution is used at a concentration of 2 to 10% by weight. It is difficult to put the sol in a tube owing to its too high viscosity when PVA is used at a concentration larger than 10% by weight. On the other hand, when PVA is used at the concentration less than 2% by weight, the sol is insufficiently gelled so that there is the possibility that the gel may flow out of the liquid junction. PVA is preferably used at a concentration of 3 to 8% by weight. It is desired that the saponification degree of PVA is 98.5% or more because there is the possibility that the residual acetyl group may be decomposed to form acetic acid which flows out of the liquid junction when the saponification degree of PVA is lower. Further, low-molecular-weight fractions flow out of the liquid junction when the molecular weight of PVA is too small while it is difficult to handle and dissolve PVA owing to its higher viscosity when its molecular weight is too large. Thus the polymerization degree of PVA is desirably 500 to 10,000.

The cross-linking agent for the PVA can be a titanium, zirconium and/or vanadium compound, added at a ratio of 0.1 to 2% by weight. The sol is insufficiently gelled, with the possibility that the gel flows out of the liquid junction, when there is less than 0.1% of cross-linking agent, while it is difficult to put the sol in a tube owing to the too high gelling speed when more than 2% of the cross-linking agent is added. It is suitable to add the cross-linking agent at a ratio of 0.5 to 2% by weight.

Among cross-linking agents, titanium compounds include inorganic salts such as titanyl sulphate; titanium alcoholates such as titanium ethylatae and titanium isopropylate; titanium acylates such as titanium citrate titanium chelate compounds of $C_{2-10}$ hydroxycarboxylic acids, β-diketones, ketoesters and aminoalcohols; zirconium compounds include zirconium chelate compounds such as zirconium lactate and zirconium acetyl acetonate; zirconium ammonium carbonate; zirconium ammonium acetate; and ammonium heptafluorozirconate; and vanadium compounds include vanadium sulfate and ammonium methavanadate. Among the above described compounds, titanium and zirconium chelate compounds having $C_{2-10}$ hydroxycarboxylic acids, β-diketones, ketoesters, or aminoalcohols as ligands, such as titanium acetyl acetonate, diisopropoxy titanium bis-acetyl acetonate, titanium triethanolamine, ammonium titanium lactate, titanium lactate, zirconium lactate, and zirconium acetyl acetonate, have the following excellent characteristics:

(1)    They can be easily put in a tube owing to the reduced gelatinizing speed at room temperature.

(2)    Their gelling can be accelerated by heating and the gel is stable even at higher temperature (steam autoclaving temperature of 120° C).

(3)    They are substantially harmless to the living body.    Accordingly, they are suitably used as the cross-linking agent of PVA for gelling the internal solution of a reference electrode.    In particular, titanium lactate is preferably used as cross-linking agent since its harmfulness to the living body is remarkably low and it is inexpensive.

Borate compounds, aluminium compounds, silicon compounds, and others that react with the OH-groups contained in PVA have been used to cross-link PVA.    However, when these cross-linking agents are used, the gelling speed of the sol is large, thereby the time during which it can be put in a tube is limited, and the gel turns to the sol when heated and thus flows out of the liquid junction when steam autoclaved.    Accordingly, the above described compounds cannot be used as cross-linking agents for gelling the internal solution of a reference electrode.

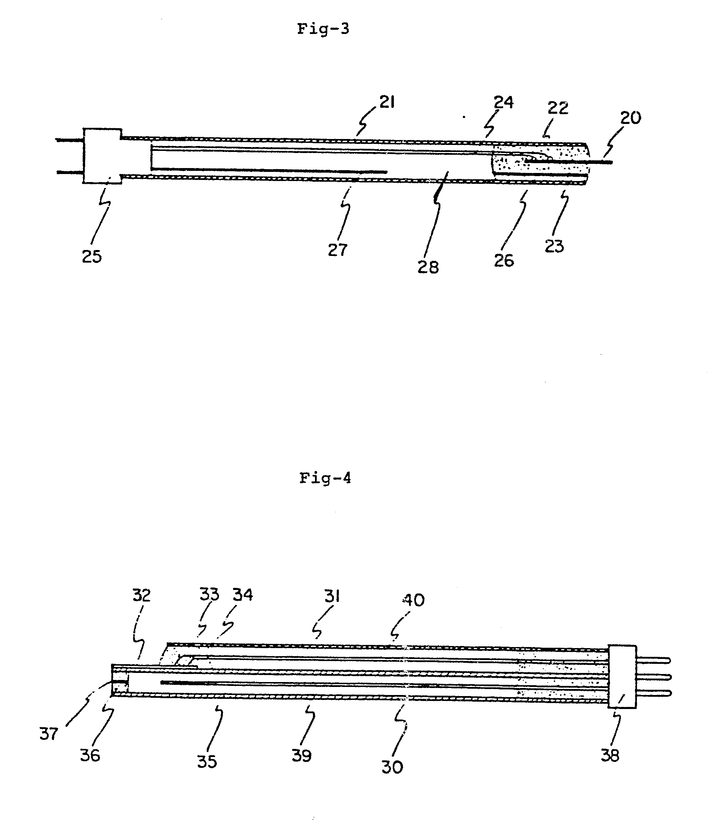

Fig. 3 shows a combined type sensor in which an ISFET and a reference electrode are housed in one piece of tube.    Referring now to Fig. 3, an ISFET 20 has an electrode 22 embedded in the resin 23 closing an open end of a tube 21.    The gate portion fixedly protrudes from the end of said tube.

A resin-coated lead wire 24 connected with the electrode of the sensor is installed along the internal wall of the tube 21 to be connected with a connector 25 which is mounted in liquid-tight manner on the other end of the tube.    A hollow fibre 26 for composing a liquid junction is embedded in the resin 23 closing that open end of tube 21.    Further, an Ag-AgCl electrode 27, which is connected with connector 25, is housed in tube 21, which is filled with gelled internal solution 28.

Fig. 4 shows a double-lumen catheter 30 provided with an ISFET 32 at the end of one hole 31.    An electrode 33 of the ISFET 32 is fixedly embedded in the resin 34, closing the open end of hole 31, while the open end of another hole 35 is closed with the resin 36, and a hollow fibre 37 composing a liquid junction is embedded in said resin 36. An Ag-AgCl electrode 39 is housed in hole 35, a lead wire 40 connected to the Ag-AgCl electrode 39 and the ISFET 32 being installed along the internal wall of the catheter 30 to be connected with a connector 38 which is mounted in liquid-tight manner on the other end of the catheter 30. Hole 36 of the catheter 30 is filled with the gelled internal solution.

The following Examples 1 to 5 illustrate the invention. The Comparative Examples 1 to 8 are of electrodes not in accordance with the invention.

A liquid junction reference electrode of the type shown in Fig. 2 is filled with internal solution, which is introduced through an open end, and then the internal solution is gelled. The resulting liquid junction reference electrode is tested for resistance to steam autoclaving (120°C x 40 minutes), and the haemolysis test was carried out for the autoclaved reference electrode. The haemolysis test was carried out in accordance with the notice of the Japanese Ministry of Public Welfare No. 278, III - I. The results are shown in Table 1. In the table (1) denotes pH and external appearance, (2) denoting the generation of bubbles, (3) denoting cleanliness, (4) denoting lead and cadmium, (5) denoting zinc, (6) denoting substances reducing potassium permanganate, and (7) denoting the evaporating residue.

Table 1

| | | Composition of gelling agents for the internal solution (saline solution) | | Gelling method | Steam autoclavability (120°C × 30 minutes) | Test on the substances flowed out | | | | | | |
| | | PVA (wt %) (polymerization degree of 1,740) | Cross linking agent (wt %) | | | 1 | 2 | 3 | 4 | 5 | 6 | 7 |
|---|---|---|---|---|---|---|---|---|---|---|---|---|
| Example | 1 | 5 | Titanium lactate  0.5 | Mixing | o | o | o | o | o | o | o | o |
| | 2 | 3 | Titanium lactate  1 | " | o | o | o | o | o | o | o | o |
| | 3 | 10 | Zirconium acetyl acetonate  2 | " | o | o | o | o | o | o | o | o |
| | 4 | 5 | Titanyl ethyl aminoalcoholate  2 | " | o | o | o | o | o | o | o | o |
| Comparative Example | 1 | 15 | Titanium lactate  1 | " | Difficult to fill | – | – | – | – | – | – | – |
| | 2 | 10 | Titanium lactate  3 | " | Difficult to fill | – | – | – | – | – | – | – |
| | 3 | 3 | Titanium lactate  0.05 | " | o | o | o | o | o | o | x | x |
| | 4 | 5 | Boric acid  1 | " | Difficult to fill | – | – | – | – | – | – | – |
| | 5 | 5 | Boric acid  0.04 | " | Flow out | – | – | – | – | – | – | – |
| | 6 | Agar-agar  1.5 | | Cooling | Flow out | – | – | – | – | – | – | – |
| | 7 | HEMA 10,  $H_2O_2$  0.5 | | Polymerization at 60°C | Phase separation | o | o | o | o | o | x | o |
| | 8 | Acrylamide  15 Methylene-bis-acrylamide  0.4 Potassium persulfate  0.07 Tetramethyl ethyleneamine  0.06 | | Redox polymerization | Bubble formed | o | o | o | o | o | x | o |

Example 5

The haemolysis test was carried out for a combined type sensor before and after steam autoclaving for 30 minutes at 120° C, in which an ISFET and a reference electrode containing the internal solution (saline solution) gelled with 5% by weight of PVA and 0.5% by weight of titanium lactate are housed in one piece of tube, as shown in Fig. 3. The results of the measurement of the change in pH and the amount of substances reducing potassium permanganate are shown in Table 2.

Blank test was carried out for the saline solution without using the combined type sensor.

Table 2

|  | pH value | Consumption of potassium permanganate |
|---|---|---|
| Before the steam autoclavation | 5.42 | 19.55 |
| After the steam autoclavation | 5.72 | 19.22 |
| Blank test | 5.31 | 19.42 |

## CLAIMS

1.    A steam-autoclavable reference electrode comprising one piece of tube 10, an internal solution 11 housed in the tube and gelled by 2 to 10% by weight of polyvinyl alcohol, and, as cross-linking agent, 0.1 to 2% by weight of one or more compounds of titanium, zirconium, and/or vanadium; an internal electrode 12 immersed in the internal solution;  and a liquid junction 13, mounted at one end of the tube 10, for connecting the inside of the tube 10 with the outside.

2.    An electrode as claimed in Claim 1, in which the titanium compounds are titanium chelate compounds containing a $C_{2-10}$ hydroxycarboxylic acid, β-diketone, a ketoester or an aminoalcohol as ligand.

3.    An electrode as claimed in Claim 2, in which the titanium chelate compound is a titanium lactate chelate compound.

Fig-1

Fig-2

Fig-3

Fig-4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-3 100 302 (H. LIST) * Claims 1, 5; abstract; page 5, line 9 - page 7, line 4; figures 1, 3, 5 * | 1 | G 01 N 27/30 G 01 N 27/00 |
| A | MEDICAL & BIOLOGICAL ENGINEERING & COMPUTING, vol. 16, no. 5, September 1978 D. PARKER et al. "Catheder-tip electrode for continuous measurement of pO2 and pCO2", pages 599-600 * Whole document * | 1 | |
| A | DE-A-2 610 530 (UNIVERSITY OF UTAH) * Claims 10, 14, 15; page 19, paragraph 3 - page 20, paragraph 1; page 25, paragraph 2 - page 26, paragraph 1; figure 5a * & US-A-4 020 830 (Cat. D, A) | 1 | |
| A | DE-A-2 934 405 (T. MUKAIBO) * Page 17, line 18 - page 18,line 14; page 25, lines 3-17; figure 4a * | 1 | **TECHNICAL FIELDS SEARCHED (Int. Cl. 3)** A 61 B 5/14 A 61 L 2/06 G 01 N 27/00 G 01 N 33/00 |
| A | US-A-4 252 627 (M. OHASHI et al.) * Claim 1; abstract; column 7; example 1; figure 2 * | 1 | |

The present search report has been drawn up for all claims

| Place of search | Date of completion of the search | Examiner |
|---|---|---|
| BERLIN | 16-08-1983 | HOFMANN D G |